# EUROPÄISCHE PATENTSCHRIFT

(11) **EP 3 857 339 B1**
(45) Veröffentlichungstag und Bekanntmachung des Hinweises auf die Patenterteilung: **02.08.2023**
(21) Anmeldenummer: 19782500.3
(22) Anmeldetag: 25.09.2019
(51) Int. Cl.: B60W 40/10, B60W 50/14, G02B 27/01, G06F 3/0346, G06F 3/01, B60K 35/00, B60K 37/06

(54) **DATENBRILLEN MIT AUTOMATISCHER AUSBLENDUNG VON ANGEZEIGTEN INHALTEN FÜR FAHRZEUGE**
SMART GLASSES WITH AUTOMATIC HIDING OF DISPLAYED CONTENT FOR VEHICLES
LUNETTES INTELLIGENTES À MASQUAGE AUTOMATIQUE DE CONTENUS AFFICHÉS POUR VÉHICULES

(30) Priorität: 27.09.2018 DE 102018216613
(43) Veröffentlichungstag der Anmeldung: 04.08.2021
(73) Patentinhaber: Bayerische Motoren Werke Aktiengesellschaft, 80809 München (DE)
(72) Erfinder: TIEFENBACHER, Philipp, 82140 Olching (DE)
(86) Internationale Anmeldenummer: PCT/EP2019/075825
(87) Internationale Veröffentlichungsnummer: WO 2020/064813

(56) Entgegenhaltungen:
- WO-A1-2016/137736
- WO-A2-2017/172984

## Beschreibung

Die Erfindung betrifft Datenbrillen mit automatischer Ausblendung von angezeigten Inhalten für Fahrzeuge.

Heutzutage sind Datenbrillen, auch Head-Mounted Displays, HMD, genannt, bekannt. Diese Datenbrillen werden von ihrem Träger auf dem Kopf getragen und weisen zumeist zwei Anzeigen auf, die jeweils direkt vor dem Auge des Trägers angeordnet sind. Die Anzeigen zeigen Inhalte an, die dem Benutzer dann freischwebend erscheinen. Die angezeigten Inhalte sind typischerweise brillenfest, bewegen sich also in ihrer Position in der Anzeige nicht. Gelegentlich wird der Einsatz von kontaktanalog angezeigten Inhalten erwogen, was bedeutet, dass die angezeigten Inhalte dem Benutzer räumlich in Verbindung mit einem Objekt in der realen Welt angezeigt werden, z.B. überlagernd oder angrenzend. Allerdings ist die kontaktanaloge Darstellung von Inhalten technisch aufwändig und kostenintensiv.

Der Einsatz von Datenbrillen in Fahrzeugen ist erwogen worden. Dabei ergibt sich beim brillenfesten Anzeigen von Inhalten das Problem, dass beim Blick ins Cockpit des Fahrzeugs, Anzeigen wie Geschwindigkeit oder Navigationshinweise durch die angezeigten Inhalte verdeckt werden können. Dokument WO 2016/137736 A1 offenbart die Verwendung von Sensoren in Datenbrillen und Fahrzeugen. Dokument WO 2017/172984 A2 offenbart ein Headset für virtuelle Realitäten mit Kopfbewegungssensorik.

Es ist eine Aufgabe der vorliegenden Erfindung, die oben genannten Nachteile zu lösen. Die Lösung wird durch das Verfahren und die Datenbrille nach den unabhängigen Ansprüchen erreicht. Vorteilhafte Ausführungsformen sind in den abhängigen Ansprüchen definiert.

Hierin wird also vorgeschlagen, die Sensorik zur Messung von Bewegungen, wie sie in den meisten Datenbrillen vorhanden ist, und Fahrdaten (Lenkwinkel und Geschwindigkeit und möglicherweise Längsbeschleunigung) von Fahrzeugen zu verwenden, um die relative Beschleunigung der Datenbrille zum Bezugssystem Fahrzeug zu bestimmen. Aufbauend auf dieser relativen Beschleunigung und ihrem Verlauf bzw. ihrer Aufzeichnung wird dann ein neuronales Netz oder eine Support Vector Machine verwendet, um die Blickrichtung der Datenbrille zu bestimmen. Die Blickrichtung der Datenbrille ist als die Richtung bestimmt, in die der Benutzer blicken würde, wenn er geradeaus blickt. Typischerweise ist die Blickrichtung der Datenbrille senkrecht zu einer Ebene durch die Anzeigen der Datenbrille (oder ggf. eine Parallele zu den Ohrenbügeln), ausgehend von dem Auflagepunkt auf der Nase.

Neuronale Netze und deren Training sind aus dem Stand der Technik bekannt. Gleiches gilt für Support-Vector-Machines (SVM). Die vorliegende Erfindung nutzt die Relativbeschleunigung als Eingabe in diese Verfahren und setzt als Ausgabe zwei Zustände bzw. Kategorien.

In einer vorteilhaften Ausführungsform ist der vorbestimmte Zeitraum zwischen 10s und 30 min, insbesondere 20s, 30s, 1 min, 5min, 10min oder 20min. Mithilfe der Aufzeichnungen kann das neuronale Netz oder die SVM die Blickrichtung der Datenbrille bestimmen. Inhärent wird durch die Verwendung der Aufzeichnungen dem neuronalen Netz und der SVM die Möglichkeit gegeben ein "Integral" zu bilden. Die zeitliche Integration der Beschleunigungen lässt theoretisch auf die Blickrichtung der Datenbrille schließen. Allerdings ist hierfür die Bestimmung der initialen Blickrichtung der Datenbrille erforderlich. In vielen Fällen wird es nicht möglich sein, die absolute Blickrichtung der Datenbrille zu bestimmen. Das vorliegende Verfahren ermöglicht die "grobe" Bestimmung und Kategorisierung der Blickrichtung, ohne dass die initiale Blickrichtung bekannt ist. Dies wird dadurch erreicht, dass dem neuronalen Netz und der SVM die "Möglichkeit" gegeben wird, bestimmte Muster, die beim Blick ins Fahrzeug oder ins Umfeld auftreten zu erkennen.

Typischerweise ist die Bewegungsmesssensorik eine intertiale Messsensorik. Oft ist die Bewegungsmesssensorik eines oder mehrere der folgenden: Gyroskop, Beschleunigungssensor und Magnetometer.

Die Bewegungsesssensorik misst die Beschleunigung und/oder Rotation vorteilhafterweise mit hoher Frequenz, nämlich mit einer Frequenz im Bereich von 50Hz bis 1000Hz, insbesondere 100Hz, 200Hz, 500Hz oder 800Hz.

Offenbart wird ebenfalls eine Datenbrille, wobei die Datenbrille dazu eingerichtet ist, eines der vorstehenden Verfahren auszuführen.

### KURZE BESCHREIBUNG DER ZEICHNUNG

Fig. 1 zeigt schematisch eine Datenbrille gemäß einem Ausführungsbeispiel.
Fig. 2 zeigt ein Ablaufdiagramm eines Verfahrens gemäß einem Ausführungsbeispiel.

### DETAILLIERTE BESCHREIBUNG DES AUSFÜHRUNGSBEISPIELS

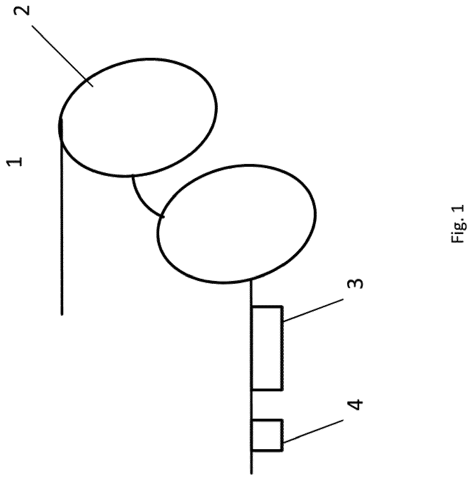

Fig. 1 zeigt schematisch eine Datenbrille gemäß einem Ausführungsbeispiel. Die Datenbrille 1 umfasst eine Anzeige 2 (und eine weitere nicht nummerierte Anzeige).

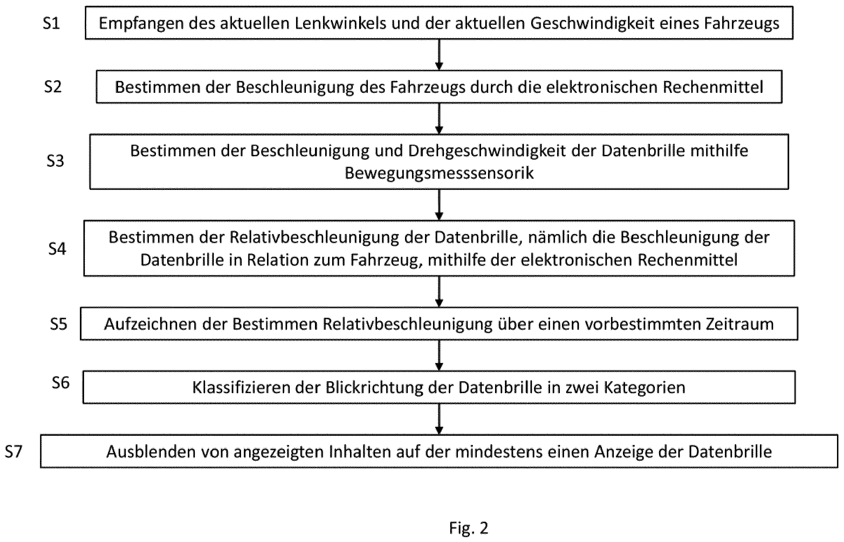

Des Weiteren umfasst die Datenbrille 1 eine Recheneinheit mit WiFi Modul zur drahtlosen Datenübertragung 3 und eine inertiale Messeinheit 4. Die Datenbrille wird wie eine typische Sehhilfe auf dem Kopf getragen, wobei die Datenbrille auf der Nase und den Ohren aufliegt. Die Datenbrille führt das in Fig. 2 gezeigte Verfahren aus.

In dem Verfahren gemäß Fig. 2 wird in Schritt S1 der aktuelle Lenkwinkel und die aktuelle Geschwindigkeit des Fahrzeugs empfangen, in dem sich die Datenbrille befindet. Aus diesen Daten wird in Schritt S2 die Beschleunigung des Fahrzeugs ermittelt. Im Schritt S3 wird die Beschleunigung der Datenbrille mithilfe der in der Datenbrille verbauten inertialen Messensorik ermittelt und es wird in Schritt S3 die Differenz zwischen den beiden Beschleunigungen gebildet um die Relativbeschleunigung zu erhalten. Diese Relativbeschleunigung wird aufgezeichnet über einen Zeitraum, Schritt S5. Mithilfe eines dafür trainierten neuronalen Netzes wird bestimmt, ob der Benutzer der Datenbrille nicht ins Umfeld des Fahrzeugs blickt. Falls der Benutzer nicht ins Umfeld des Fahrzeugs blickt, werden die angezeigten Inhalte ausgeblendet. Diese Beschreibung beschreibt mehrere Ausführungsformen. Die beschriebenen Ausführungsformen sind jedoch nicht so zu verstehen, dass sie notwendigerweise die Erfindung definieren. Die beschriebenen Ausführungsformen definieren nur dann die Erfindung, wenn sie in den Umfang der beigefügten Ansprüche fallen. Daher ist der Schutzumfang der vorliegenden Erfindung ausschließlich durch die beigefügten Ansprüche definiert.

## Patentansprüche

1. Verfahren zur Ausführung durch elektronische Rechenmittel (3) in Datenbrillen (1), wobei die Datenbrillen (1) jeweils mindestens elektronische Rechenmittel (3), eine Anzeige (2), eine Bewegungsmesssensorik (4) und Mittel zur drahtlosen Kommunikation (3) umfassen, wobei das Verfahren umfasst:
Empfangen des aktuellen Lenkwinkels und der aktuellen Geschwindigkeit eines Fahrzeugs, in dem sich die Datenbrille (1) befindet, über die Mittel zur drahtlosen Kommunikation (3);
Bestimmen der Beschleunigung des Fahrzeugs durch die elektronischen Rechenmittel (3);
Bestimmen der Beschleunigung und Drehgeschwindigkeit der Datenbrille (1) mithilfe der Bewegungsmesssensorik (4);
Bestimmen der Relativbeschleunigung der Datenbrille (1), nämlich die Beschleunigung der Datenbrille (1) in Relation zum Fahrzeug, mithilfe der elektronischen Rechenmittel (3);
Aufzeichnen der bestimmten Relativbeschleunigung über einen vorbestimmten Zeitraum;
Bestimmen und Klassifizieren der Blickrichtung der Datenbrille (1) in zwei Kategorien, nämlich 1) die
Blickrichtung ist in das Umfeld des Fahrzeugs gerichtet, und 2) die Blickrichtung ist nicht in das Umfeld des Fahrzeugs gerichtet, mithilfe eines Algorithmus, der auf einem neuronalen Netz oder Support Vector Machines basiert, unter Verwendung der aufgezeichneten bestimmten Relativbeschleunigung durch die elektronischen Rechenmittel (3); wobei die Blickrichtung der Datenbrille eine Richtung ist, die senkrecht zur Ebene durch die Anzeigen der Datenbrille ist und von dem Auflagenpunkt der Brille auf der Nase ausgeht; und
Ausblenden von angezeigten Inhalten auf der mindestens einen Anzeige (2) der Datenbrille (1), falls die Blickrichtung in die Kategorie 2) eingeordnet wurde.

2. Verfahren nach Anspruch 1, wobei der vorbestimmte Zeitraum zwischen 10 Sekunden (s) und 30 Minuten (min) liegt, insbesondere 20s, 30s, 1min, 5min, 10min oder 20min.

3. Verfahren nach einem der vorhergehenden Ansprüche, wobei die Bewegungsmesssensorik (4) eine intertiale Messsensorik ist.

4. Verfahren nach einem der Ansprüche 1 oder 2, wobei die Bewegungsmesssensorik (4) eines oder mehrere der Folgenden sind: Gyroskop, Beschleunigungssensor und Magnetometer.

5. Verfahren nach einem der vorhergehenden Ansprüche, wobei die Bewegungsmesssensorik (4) die Beschleunigung und/oder die Rotation mit hoher Frequenz misst, nämlich mit einer Frequenz im Bereich von 50 Hertz (Hz) bis 1000Hz, insbesondere 100Hz, 200Hz, 500Hz oder 800Hz.

6. Datenbrille, wobei die Datenbrille (1) dazu eingerichtet ist, ein Verfahren nach einem der vorhergehenden Ansprüche auszuführen.

## Claims

1. Method for performance by way of electronic computing means (3) in smart glasses (1), wherein the smart glasses (1) comprise in each case at least electronic computing means (3), a display (2), a motion measurement sensor system (4) and means for wireless communication (3), the method comprising:
receiving the current steering angle and the current velocity of a vehicle containing the smart glasses (1) via the means for wireless communication (3);
determining the acceleration of the vehicle by way of the electronic computing means (3);
determining the acceleration and speed of rotation of the smart glasses (1) using the motion measurement sensor system (4);
determining the relative acceleration of the smart glasses (1), specifically the acceleration of the smart glasses (1) in relation to the vehicle, using the electronic computing means (3);
recording the determined relative acceleration over a predetermined period of time;
determining and classifying the line of vision of the smart glasses (1) into two categories, specifically 1) the line of vision is directed into the surroundings of the vehicle, and 2) the line of vision is not directed into the surroundings of the vehicle, using an algorithm based on a neural network or support vector machines, by using the recorded determined relative acceleration by way of the electronic computing means (3); wherein the line of vision of the smart glasses is a direction that is perpendicular to the plane through the displays of the smart glasses and starts out from the support point for the glasses on the nose; and
hiding displayed content on the at least one display (2) of the smart glasses (1) if the line of vision has been classified into category 2) .

2. Method according to Claim 1, wherein the predetermined period of time is between 10 seconds (s) and 30 minutes (min), in particular 20 s, 30 s, 1 min, 5 min, 10 min or 20 min.

3. Method according to either of the preceding claims, wherein the motion measurement sensor system (4) is an inertial measurement sensor system.

4. Method according to either of Claims 1 and 2, wherein the motion measurement sensor system (4) is one or more of the following: gyroscope, acceleration sensor and magnetometer.

5. Method according to one of the preceding claims, wherein the motion measurement sensor system (4) measures the acceleration and/or the rotation at high frequency, specifically at a frequency in the range from 50 hertz (Hz) to 1000 Hz, in particular 100 Hz, 200 Hz, 500 Hz or 800 Hz.

6. Smart glasses, wherein the smart glasses (1) are designed to perform a method according to one of the preceding claims.

## Revendications

1. Procédé, destiné à être réalisé par des moyens de calcul (3) électroniques dans des lunettes intelligentes (1), les lunettes intelligentes (1) comprenant chacune au moins un moyen de calcul (3) électronique, un affichage (2), un capteur de déplacement (4) et des moyens permettant la communication (3) sans fil, le procédé consistant dans:
la réception de l'angle de braquage actuel et de la vitesse actuelle d'un véhicule dans lequel se trouvent les lunettes intelligentes (1) par l'intermédiaire des moyens permettant la communication (3) sans fil ;
la détermination de l'accélération du véhicule par les moyens de calcul (3) électroniques ;
la détermination de l'accélération et de la vitesse de rotation des lunettes intelligentes (1) à l'aide du capteur de déplacement (4);
la détermination de l'accélération relative des lunettes intelligentes (1), à savoir l'accélération des lunettes intelligentes (1) en relation avec le véhicule, à l'aide des moyens de calcul (3) électroniques ;
l'enregistrement de l'accélération relative déterminée sur une période prédéfinie ;
la détermination et la classification de la direction de visée des lunettes intelligentes (1) en deux catégories, à savoir 1) la direction de visée est orientée dans l'environnement du véhicule,
et 2) la direction de visée n'est pas orientée dans l'environnement du véhicule, à l'aide d'un algorithme, qui est basé sur un réseau neuronal ou sur des machines à vecteurs de support, avec utilisation par les moyens de calcul (3) électroniques de l'accélération relative déterminée enregistrée ; la direction de visée des lunettes intelligentes étant une direction qui est perpendiculaire au plan à travers les affichages des lunettes intelligentes et qui part du point d'appui des sur le nez, et
le masquage de contenus affichés sur l'au moins un affichage (2) des lunettes intelligentes (1), si la direction de visée a été affectée à la catégorie 2).

2. Procédé selon la revendication 1, la période prédéfinie se situant entre 10 secondes (s) et 30 minutes (min), notamment à 20 s, à 30 s, à 1 mn, à 5 mn, à 10 mn ou à 20 mn.

3. Procédé selon l'une quelconque des revendications précédentes, le capteur de déplacement (4) étant un capteur de mesure inertiel.

4. Procédé selon l'une quelconque des revendications 1 ou 2, le capteur de déplacement (4) étant l'un ou plusieurs des suivants : un gyroscope, un capteur d'accélération et un magnétomètre.

5. Procédé selon l'une quelconque des revendications précédentes, le capteur de déplacement (4) mesurant l'accélération / ou la rotation à haute fréquence, à savoir avec une fréquence de l'ordre de 50 Hertz (Hz) à 1000 Hz, notamment de 100 Hz, de 200 Hz, de 500 Hz ou de 800 Hz.

6. Lunettes intelligentes, les lunettes intelligentes (1) étant aménagées pour réaliser un procédé selon l'une quelconque des revendications précédentes.
